(19) Europäisches Patentamt
European Patent Office
Office européen des brevets

(11) **EP 4 722 982 A1**

(12) **EUROPEAN PATENT APPLICATION**
published in accordance with Art. 153(4) EPC

(43) Date of publication:
08.04.2026 Bulletin 2026/15

(21) Application number: 24816025.1

(22) Date of filing: 29.05.2024

(51) International Patent Classification (IPC):
*G06N 3/0455* (2023.01)     *G06N 3/08* (2023.01)
*G06T 9/00* (2006.01)

(86) International application number:
PCT/SG2024/050361

(87) International publication number:
WO 2024/248736 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.05.2023 CN 202310618707

(71) Applicant: Alibaba Innovation Private Limited
Singapore 189554 (SG)

(72) Inventors:
• CHEN, Dayou
Beijing 100102 (CN)
• ZHANG, Shiwei
Hangzhou City, Zhejiang 310030 (CN)
• ZHANG, Yingya
Beijing 100102 (CN)
• ZHAO, Deli
Hangzhou City, Zhejiang 310030 (CN)

(74) Representative: Novagraaf Technologies
2 rue Sarah Bernhardt
CS90017
92665 Asnières-sur-Seine Cedex (FR)

(54) **VIDEO GENERATION METHOD AND APPARATUS, AND METHOD AND APPARATUS FOR TRAINING VIDEO GENERATION MODEL**

(57) Embodiments of the present disclosure disclose a video generation method, and a method and an apparatus for training a video generation model. A main technical solution includes that: a local condition is obtained, where the local condition includes at least one of a spatial condition and a temporal condition; the local condition is encoded to obtain a local condition feature representation; a noise sequence is integrated with the local condition feature representation, to obtain a noise latent vector sequence; the noise latent vector sequence is denoised by using a diffusion model, to obtain a denoised latent vector sequence; and decoding processing is performed on the denoised latent vector sequence to generate a video.

FIG. 4

## Description

Cross-Reference to Related Applications

The present disclosure claims priority of Chinese Patent Application No. 202310618707.8, filed to China National Intellectual Property Administration on May 29, 2023 and titled "VIDEO GENERATION METHOD, AND METHOD AND APPARATUS FOR TRAINING VIDEO GENERATION MODEL", the content of which is hereby incorporated by reference in its entirety.

TECHNICAL FIELD

The present disclosure relates to the field of computer vision technologies, and in particular, to a video generation method, a method and an apparatus for training a video generation model.

BACKGROUND OF THE INVENTION

Continuous development of artificial intelligence technologies provides new opportunities for computer vision technologies, where a capability of automatically generating videos is increasingly powerful. The text-based video generation technology provides brand new tools for many content creators, and makes video content creation that originally requires professionals and expensive equipment easier and more cost-effective. However, currently, in most technologies, a text is used as a guiding condition, and generated videos lack diversity and flexibility, resulting in low video quality.

SUMMARY OF THE INVENTION

In view of this, the present disclosure provides a video generation method, and a method and an apparatus for training a video generation model, to improve quality of a generated video.

The present disclosure provides the following solutions.

According to a first aspect, a video generation method is provided, including the following steps.

A local condition is obtained, where the local condition includes at least one of a spatial condition and a temporal condition.

The local condition is encoded to obtain a local condition feature representation.

A noise sequence is integrated with the local condition feature representation, to obtain a noise latent vector sequence.

The noise latent vector sequence is denoised by using a diffusion model, to obtain a denoised latent vector sequence.

Decoding processing is performed on the denoised latent vector sequence to generate a video.

According to a feasible implementation in the embodiments of the present disclosure, the video generation method further includes the following steps. A global condition is obtained, where the global condition includes at least one of a text condition, a style condition, and a color condition. The global condition is encoded to obtain a global condition feature representation.

An operation of denoising the noise latent vector sequence by using a diffusion model includes the following steps. The diffusion model performs cross-attention processing on the noise latent vector sequence by using the global condition feature representation to predict noise, and performs denoising processing by using the predicted noise.

According to a feasible implementation in the embodiments of the present disclosure, the spatial condition includes at least one of a single image and a single semantic sketch; and
the temporal condition includes at least one of a motion vector sequence, a depth map sequence, a mask map sequence, a semantic sketch sequence, and a grayscale map sequence.

According to a feasible implementation in the embodiments of the present disclosure, an operation of encoding the global condition to obtain the global condition feature representation includes the following steps. Text encoding is performed on the text condition to obtain a text feature representation. Image encoding is performed on at least one of the style condition and the color condition to obtain an image feature representation. The text feature representation is integrated with the image feature representation to obtain the global condition feature representation.

According to a feasible implementation in some embodiments of the present disclosure, an operation of encoding the local condition to obtain the local condition feature representation includes the following steps.

Each local condition is encoded, by using a respective temporal-spatial condition encoder, to obtain a feature tensor corresponding to each local condition respectively, where each temporal-spatial condition encoder corresponds to one local condition.

Fusion processing is performed on the feature tensor corresponding to each local condition to obtain the local condition feature representation.

According to a feasible implementation in the embodiments of the present disclosure, an operation of encoding, by using the temporal-spatial condition encoder, each local condition respectively includes the following steps.

Spatial feature encoding is performed on the local condition by using the temporal-spatial condition encoder, to obtain a spatial feature representation of the local condition.

In response to the local condition being a sequence, temporal self-attention processing is performed on the spatial feature representation of the local condition, to obtain a feature tensor corresponding to the local condition. In response to the local condition not being the sequence, the spatial feature representation of the local condition in a temporal dimension is copied, to generate a spatial feature representation in the temporal dimension, and temporal self-attention processing is performed on the spatial feature representation in the temporal dimension, to obtain a feature tensor corresponding to the local condition.

According to a second aspect, a method for training a video generation model is provided, including the following steps.

First training data including multiple first training samples is obtained, where each first training sample includes a local condition sample, and the local condition sample includes at least one of a spatial condition sample and a temporal condition sample.

A video generation model is trained by using the first training data, where the video generation model includes a temporal-spatial condition encoder, a diffusion model, and a decoder, where the temporal-spatial condition encoder encodes the local condition sample to obtain a local condition feature representation; the diffusion model denoises a noise latent vector sequence, to obtain a denoised latent vector sequence, where the noise latent vector sequence is obtained by integrating a noise sequence with the local condition feature representation; and the decoder performs decoding processing on the denoised latent vector sequence to generate a video; and a target of the training includes minimizing a difference between noise predicted by the diffusion model during denoising processing and Gaussian noise.

According to a feasible implementation of some embodiments of the present disclosure, each first training sample further includes a global condition sample, where the global condition sample includes at least one of a text condition sample, a style condition sample, and a color condition sample.

The video generation model further includes a global encoder, where the global encoder encodes the global condition sample to obtain a global condition feature representation.

An operation of the diffusion model denoising the noise latent vector sequence includes the following step. The diffusion model performs cross-attention processing on the noise latent vector sequence by using the global condition feature representation to predict noise, and denoising processing is performed by using the predicted noise.

According to a feasible implementation in the embodiments of the present disclosure, the global encoder and the decoder use pre-trained parameters, and update, in each iteration of the training, parameters of the temporal-spatial condition encoder and the diffusion model by using a loss function corresponding to the target of the training.

According to a feasible implementation of some embodiments of the present disclosure, an operation of obtaining first training data including the multiple first training samples includes the following steps.

A video sample is obtained.

At least one of a description text, a style image, and a color histogram of the video sample are obtained, the description text is set as the text condition sample, the style image is set as the style condition sample, and the color histogram is set as the color condition sample respectively.

At least one of a single image and a single semantic sketch is extracted as the spatial condition sample.

At least one of a motion vector sequence, a depth map sequence, a mask map sequence, a semantic sketch sequence, and a grayscale map sequence is extracted as the temporal condition sample.

According to a feasible implementation of some embodiments of the present disclosure, before training the video generation model by using the first training data, the video generation method further includes the following steps. The diffusion model is pre-trained and after obtaining parameters of the diffusion model through pre-training, the video generation model is trained by using the first training data.

An operation of pre-training the diffusion model includes the following steps.

Second training data including multiple second training samples is obtained, where the second training samples include a description text extracted from a video sample and determined as a text sample.

The text sample is encoded by using the global encoder, to obtain a text feature representation.

The text feature representation and the noise sequence are inputted into the diffusion model to train the diffusion model, where the diffusion model denoises the noise sequence by using the text feature representation. A target of the training includes minimizing a difference between noise predicted by the diffusion model at each time step during denoising processing and Gaussian noise.

According to a feasible implementation in some embodiments of the present disclosure, an operation of encoding the local condition sample using the temporal-spatial condition encoder to obtain the local condition feature representation includes the following steps.

Local condition samples are respectively encoded by using temporal-spatial condition encoders, to obtain a feature tensor corresponding to each local condition sample, where each temporal-spatial condition encoder corresponds to one local condition sample.

The feature tensor corresponding to each local condition sample is fused, to obtain the local condition feature representation.

According to a feasible implementation in the embodiments of the present disclosure, an operation of respectively encoding local condition samples by using temporal-spatial condition encoders includes the following steps.

Spatial feature encoding is performed on a local condition sample by using the temporal-spatial condition encoder, to obtain a spatial feature representation of the local condition sample.

In response to the local condition sample being a sequence, temporal self-attention processing is performed on the spatial feature representation of the local condition sample, to obtain a feature tensor corresponding to the local condition sample. In response to the local condition sample not being a sequence, the spatial feature representation of the local condition sample in a temporal dimension is copied, to generate a spatial feature representation in the temporal dimension, and temporal self-attention processing is performed on the spatial feature representation in the temporal dimension, to obtain the feature tensor corresponding to the local condition sample.

According to a third aspect, a video generation method is provided, applied to a cloud server, the video generation method including the following steps.

A local condition is obtained from a user terminal, where the local condition includes at least one of a spatial condition and a temporal condition.

The local condition is encoded to obtain a local condition feature representation.

A noise sequence is integrated with the local condition feature representation, to obtain a noise latent vector sequence.

The noise latent vector sequence is denoised by using a diffusion model, to obtain a denoised latent vector sequence.

Decoding processing is performed on the denoised latent vector sequence to generate a video.

The video is sent to the user terminal for display.

According to a fourth aspect, a video generation apparatus is provided, including:

a condition obtaining unit, configured to obtain a local condition, where the local condition includes at least one of a spatial condition and a temporal condition; and

a video generation unit, configured to encode the local condition to obtain a local condition feature representation; integrate a noise sequence with the local condition feature representation, to obtain a noise latent vector sequence; denoise the noise latent vector sequence by using a diffusion model, to obtain a denoised latent vector sequence; and perform decoding processing on the denoised latent vector sequence to generate a video.

According to a fifth aspect, an apparatus for training a video generation model is provided, including:

a sample obtaining unit, configured to obtain first training data including multiple first training samples, where each first training sample includes a local condition sample, and the local condition sample includes at least one of a spatial condition sample and a temporal condition sample;

a model training unit, configured to train a video generation model by using the first training data, where the video generation model includes a temporal-spatial condition encoder, a diffusion model, and a decoder, where the temporal-spatial condition encoder encodes the local condition sample to obtain a local condition feature representation; the diffusion model denoises a noise latent vector sequence, to obtain a denoised latent vector sequence, where the noise latent vector sequence is obtained by integrating a noise sequence with the local condition feature representation; and the decoder performs decoding processing on the denoised latent vector sequence to generate a video; and

a target of the training includes minimizing a difference between noise predicted by the diffusion model during denoising processing and Gaussian noise.

According to a sixth aspect, a computer-readable storage medium is provided, storing a computer program, where the steps of the method according to any one of the first aspect to the third aspect are implemented when the computer program is executed by a processor.

According to a seventh aspect, an electronic device is provided, including:

at least one processor; and

a memory associated with the at least one processor, where the memory is configured to store program instructions, and the program instructions, when being read and executed by the at least one processor, implement the steps of the method according to any one of the first aspect to the third aspect.

According to specific embodiments provided in the present disclosure, the present disclosure discloses the following technical effects.

1) In the present disclosure, at least one of the spatial condition and the temporal condition is integrated as the local condition. The local condition feature representation is used for integration with the noise sequence, to obtain the noise latent vector sequence, and the noise latent vector sequence is denoised, to obtain the denoised latent vector sequence, and further, decoding is performed, to obtain the video. In this manner, video generation is no longer limited to the text condition, and instead, at least one of the spatial condition and the temporal condition is introduced to guide video generation, to generate videos more flexibly and diversely, thereby improving quality of the videos.

2) In the present disclosure, a needed video is generated by combining multiple global conditions and spatial conditions and temporal conditions in multiple local conditions. The temporal-spatial condition encoder implements encoding, alignment, and fusion of the multiple local conditions, and integrates the local conditions with the noise sequence to implement local control on the video. The global condition is encoded and integrated by using the global encoder, and cross-attention processing is performed on the noise latent vector sequence by using the global condition feature representation in the diffusion model, to implement global control on the video. Such a manner greatly improves controllability of video generation, so that generated videos are more flexible and diverse.

3) In the present disclosure, a motion vector sequence is newly introduced to the temporal condition, and by integrating a control signal of the motion vector sequence, the video generation model can capture inter-frame dynamics, thereby controlling internal motion in a video.

4) The temporal-spatial condition encoder provided in the present disclosure first extracts local spatial information, and then performs temporal dimension modeling, to promote explicit embedding in a time domain. In addition, a unified interface is provided for different local conditions, to enhance inter-frame consistency. For a non-temporal dimension-type spatial condition such as a single image or a single semantic sketch, the spatial condition is copied in a temporal dimension to ensure consistency with the temporal condition, thereby implementing fusion of local conditions. Such encoding and fusion processing enables a subsequently generated video to be more controllable in terms of temporal and spatial perception.

5) In the present disclosure, before a video generation apparatus is trained, a diffusion model is first pretrained by using training data of a text-generated video, and the video generation model is further trained based on parameters of the diffusion model obtained through pre-training, thereby improving an effect and efficiency of the video generation model.

Certainly, it is not necessary for any one product implementing the present disclosure to achieve all the above-mentioned advantages at the same time.

BRIEF DESCRIPTION OF DRAWINGS

To describe the technical solutions of the embodiments of the present disclosure or the related art more clearly, the accompanying drawings required for describing the embodiments or the related art are briefly described below. Apparently, the accompanying drawings in the following description show some embodiments of the present disclosure, and a person having ordinary skill in the art may still derive other drawings from these accompanying drawings without creative efforts.

FIG. 1 is a system architecture diagram applied to some embodiments of the present disclosure.

FIG. 2 is a flowchart of a video generation method according to some embodiments of the present disclosure.

FIG. 3 is a schematic diagram of conditions required for video generation according to some embodiments of the present disclosure.

FIG. 4 is a schematic diagram of a principle of a video generation model according to some embodiments of the present disclosure.

FIG. 5 is a schematic structural diagram of a temporal-spatial condition encoder according to some embodiments of the present disclosure.

FIG. 6 is a schematic diagram of a principle of a diffusion model at respective time steps according to some embodiments of the present disclosure.

FIG. 7a to FIG. 7d are exemplary diagrams of four generated videos according to some embodiments of the present disclosure.

FIG. 8 is a flowchart of a method for training a video generation model according to some embodiments of the present disclosure.

FIG. 9 is a schematic block diagram of a video generation apparatus according to some embodiments of the present disclosure.

FIG. 10 is a schematic block diagram of an apparatus for training a video generation model according to some embodiments of the present disclosure.

FIG. 11 is a schematic block diagram of an electronic device according to some embodiments of the present disclosure.

DETAILED DESCRIPTION OF THE INVENTION

The following clearly and completely describes the technical solutions in embodiments of the present disclosure with reference to the accompanying drawings in the embodiments of the present disclosure. Apparently, the described embodiments are some rather than all of the embodiments of the present disclosure. All other embodiments obtained by a person having ordinary skill in the art based on the embodiments of the present disclosure fall within the protection scope of the present disclosure.

The terms used in embodiments of the present disclosure are for the purpose of illustrating specific embodiments, and are not intended to limit the present disclosure. Unless otherwise specified in the context, words, such as "a", "the", and "this", in a singular form in the embodiments of the present disclosure and the appended claims include plural forms.

The term "and/or" used in the present disclosure describes an association relationship for describing associated objects and represents that three relationships may exist. For example, A and/or B may represent the following three cases: A exists, both A and B exist, and B exists. In addition, the character "/" in the present disclosure generally indicates an "or" relationship between the associated objects.

Depending on the context, for example, words "if" used herein is explained as "while" or "when" or "in response to determining" or "in response to detecting". Similarly, depending on the context, phrases "if determining" or "if detecting (a stated condition or event)" is explained as "when determining" or "in response to determining" or "when detecting (the stated condition or event)" or "in response to detecting (the stated condition or event)".

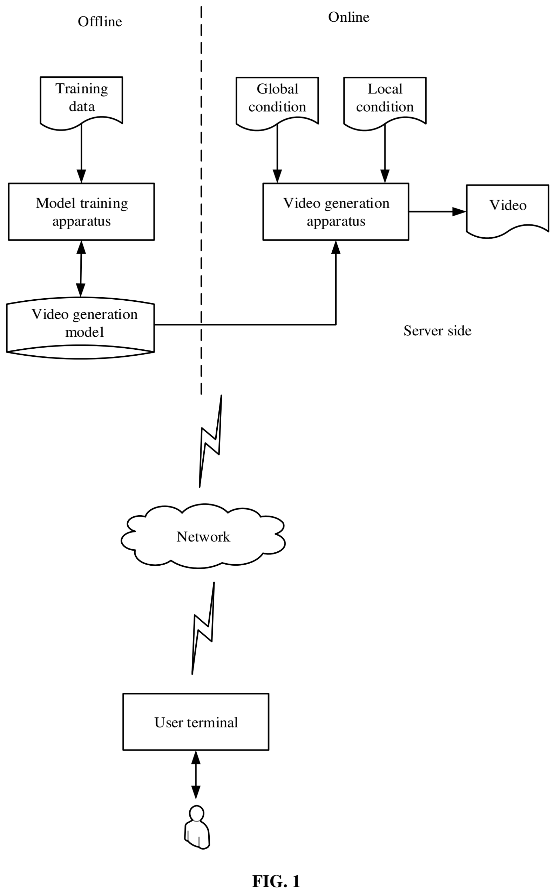

To facilitate understanding of the present disclosure, a system architecture to which the present disclosure is applicable is first briefly described. FIG. 1 shows a system architecture diagram applied to some embodiments of the present disclosure. As shown in FIG. 1, the system architecture includes a user terminal, and a model training apparatus and a video generation apparatus arranged on a server side.

The model training apparatus on the server side performs model training in an offline stage by using the method provided in some embodiments of the present disclosure, to obtain a video generation model.

The user terminal may exchange information with the video generation apparatus on the server side through a network. For example, the user terminal may send, to the video generation apparatus through the network, condition information that is input by a user and that is used for video generation. The condition information may include a global condition and a local condition. Specific content is described in detail in subsequent embodiments.

The video generation apparatus may generate a video under constraints of the global condition and the local condition by using the trained video generation model, and send the generated video to the user terminal through the network, for the user terminal to display the video.

The foregoing user terminal may include, but is not limited to, an intelligent mobile terminal, a smart home device, a wearable device, an intelligent medical device, a personal computer (PC), and the like. The intelligent mobile device may include, for example, a mobile phone, a tablet computer, a notebook computer, a personal digital assistant (PDA), and an Internet vehicle. The smart home device may include a smart appliance, for example, an appliance with a video playback function such as a smart television or a smart refrigerator. The wearable device may include, for example, a smart watch, smart glasses, a smart band, a virtual reality (VR) device, an augmented reality (AR) device, and a mixed reality device (that is, a device that can support VR and AR).

The model training apparatus and the video generation apparatus are separately arranged as independent servers, or are arranged in the same server or server group, or are arranged in independent cloud servers or the same cloud server. A cloud server, also referred to as a cloud computing server or a cloud host, is a host product in a cloud computing service system, to solve defects of high management difficulty and poor service scalability that exist in conventional physical host and virtual private server (VPS) services. The model training apparatus and the video generation apparatus may also be arranged in a computer terminal having strong computing power.

It should be noted that in addition to online video generation, the video generation apparatus may also perform video generation in an offline manner.

It should be understood that, quantities of user terminals, model training apparatuses, video generation apparatuses, and video generation models in FIG. 1 are schematic. According to implementation requirements, there are any quantities of user terminals, model training apparatuses, video generation apparatuses, and video generation models.

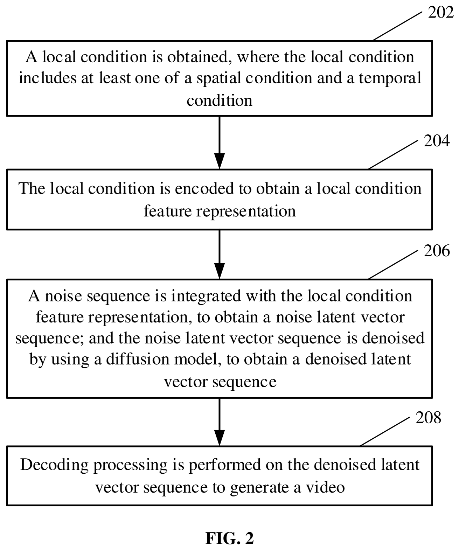

FIG. 2 is a flowchart of a video generation method according to some embodiments of the present disclosure. The video generation method is performed by the video generation apparatus in the system architecture shown in FIG. 1. As shown in FIG. 2, the video generation method includes the following steps.

In step 202, a local condition is obtained, where the local condition includes at least one of a spatial condition and a temporal condition.

In step 204, the local condition is encoded to obtain a local condition feature representation.

In step 206, a noise sequence is integrated with the local condition feature representation, to obtain a noise latent vector sequence; and the noise latent vector sequence is denoised by using a diffusion model, to obtain a denoised latent vector sequence.

In step 208, decoding processing is performed on the denoised latent vector sequence to generate a video.

It can be seen from the foregoing process that, in the present disclosure, at least one of the spatial condition and the temporal condition is integrated as the local condition. The local condition feature representation is used for integration with the noise sequence, to obtain the noise latent vector sequence, and the global condition feature representation is used for denoising the noise latent vector sequence, to obtain the denoised latent vector sequence, and further, decoding is performed, to obtain the video. In this manner, video generation is no longer limited to the text condition, and instead, at least one of the spatial condition and the temporal condition is introduced to guide video generation, to generate videos more flexibly and diversely, thereby improving quality of the videos.

The steps in the foregoing process are separately described below in detail. First, in step 202, an operation of "obtaining the local condition" is described in detail with reference to some embodiments.

In existing video generation methods, videos are usually generated under guidance of text conditions, and have poor flexibility and diversity. In some embodiments of the present disclosure, a new combinatorial condition is introduced to improve controllability of video generation. From the perspective of an introduction manner, the local condition is at least included, and the global condition is further included.

The global condition mainly includes at least one of a text condition, a style condition, and a color condition. The text condition mainly describes video content, and globally reflects content of a video to be generated. The style condition may generally be a style image, and an objective of the style image as a condition is to generate a video having a style feature consistent with the style feature of the style image. That is, the video, as a whole, has a style expressed in the style image. The color condition is in a form of a color histogram or the like, and an objective of the color condition as a condition is to guide color distribution of a generated video.

The local condition mainly includes at least one of the spatial condition and the temporal condition. The spatial condition includes at least one of a single image, a single semantic sketch, and the like. The single image is an individual image used for limiting content and a structure of an image frame in a video. The semantic sketch, also referred to as a hand-drawn sketch, a sketch, or the like, is a manner used for describing basic semantics of an object in an image and is a generalized expression, mainly describing an edge (or contour) feature of the object, in which details and redundant features of the object can be ignored, and main information is retained. It can be seen that the spatial condition mainly guides video content in terms of a spatial feature.

The temporal condition includes at least one of a motion vector sequence, a depth map sequence, a mask map sequence, and a semantic sketch sequence. Since the video is an image sequence, correspondingly, the temporal condition is more sophisticated guidance for the video along the temporal dimension.

The motion vector sequence includes motion vectors between adjacent frames. The motion vector indicates a moving direction of each token (element) between adjacent frames, including a horizontal direction and a vertical direction. Therefore, the motion vector is represented as a two-dimensional vector. The motion vector explicitly expresses movement of each token between two adjacent image frames, so that the video generated by the video generation model has motion controllability. Each token of the image refers to an element constituting the image. For an image, when the image is divided into non-overlapping blocks, the blocks, a start symbol, and the like in the image are all tokens.

The depth map sequence is formed by frames of depth maps. The depth map includes depth information of tokens in an image frame, and is used for guiding depth information of frames in the video.

The mask map sequence is formed by frames of mask maps. Each mask map is to perform mask processing on content of some regions in the image frame, so that the model has a capability of predicting content of a mask part. The region of the mask is user-specified or randomly determined.

The semantic sketch sequence is formed by frames of semantic sketches. Compared with a single semantic sketch in a spatial condition, the sketch sequence can provide more control details.

The grayscale map sequence is formed by frames of grayscale maps. Each grayscale map includes grayscale information of tokens in the image frame, and is used for guiding grayscale information of frames in the video.

The lengths of the sequences in the foregoing temporal condition are the same, and are all equal to the length of the generated video, for example, are represented as T1.

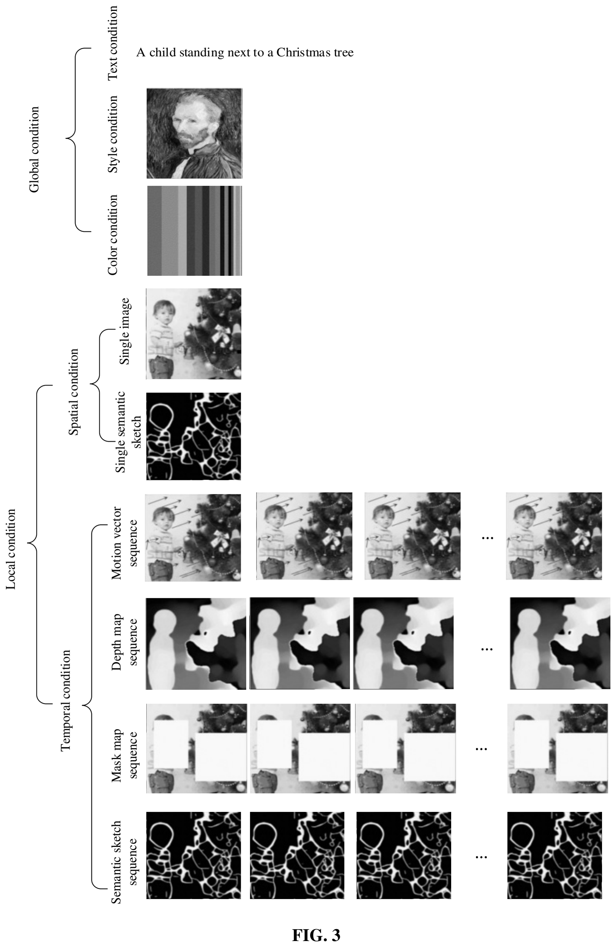

For example, the text condition is "A child standing next to a Christmas tree", the style condition is a style image, used for limiting an overall style of a generated video, that is, a style feature of the style image is transferred to the generated video, and the color condition is a color histogram, as shown in FIG. 3, used for limiting color distribution of the generated video. A single image in the spatial condition is an image including the child and the Christmas tree, and used for limiting appearances of the child and the Christmas tree in the generated video, as shown in FIG. 3. The semantic sketch is a diagram of basic lines describing the child and the Christmas tree, and used for limiting basic shapes and positions of the child and the Christmas tree. The motion vector sequence in the temporal condition includes a motion vector between adjacent frames, and is schematically represented by a small arrow in the figure. The depth map sequence includes frames of depth maps. The mask map sequence includes frames of mask maps. The semantic sketch sequence includes frames of semantic sketches. Lengths of all the sequences are T1, where T1 is a length of a video to be generated.

In one of the feasible implementations, a condition input interface is provided for a user, and the user may choose to input the foregoing global condition and local condition on the interface. For example, the user may enter a text condition in a text input box. In another example, the user may input, by using an image drawing or editing tool provided on the interface, at least one of a single image and a single semantic sketch as the spatial condition, input at least one of a motion vector sequence, a depth map sequence, a mask map sequence, a semantic sketch sequence, and the like as the temporal condition, and may input a style image by uploading a self-selected image or selecting an image from an image library provided on the interface. When inputting the motion vector sequence, the user may select a specified region in an image by using a box, and generate a moving track in a manner such as a specified gesture or a mouse track to indicate a moving path of the specified region in a video. The server side automatically generates the motion vector sequence according to the moving track. In addition to the condition input manners listed above, other condition input manners may also be used, which are not enumerated herein.

An operation of step 204, that is, "encoding the local condition to obtain a local condition feature representation, encoding the global condition to obtain the global condition feature representation, and encoding the local condition to obtain the local condition feature representation", is described in detail below with reference to some embodiments.

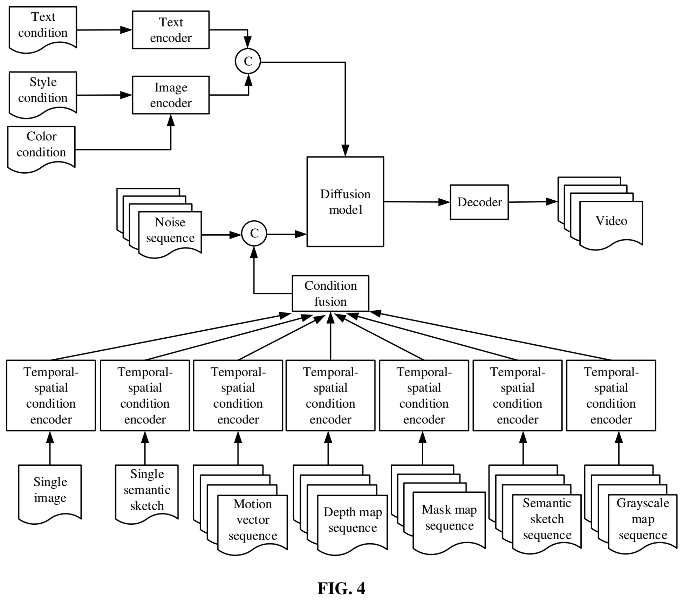

Step 204 to step 208 involved in FIG. 2 are implemented through a pre-trained video generation model. As shown in FIG. 4, the video generation model may include a temporal-spatial condition encoder, a diffusion model, and a decoder, and may further include a global encoder. This step is mainly performed by the temporal-spatial condition encoder. When a global condition is used, the step is further performed by the global encoder.

The global encoder is configured to encode the global condition to obtain a global condition feature representation.

When the global condition includes a text condition, text encoding is performed on the text condition by using a text encoder to obtain a text feature representation, and the text feature representation is used as the global condition feature representation.

When the global condition includes the text condition and a style image, the text encoding is performed on the text condition by using the text encoder to obtain a text feature representation, and image encoding is performed on at least one of a style condition and a color condition by using an image encoder to obtain an image feature representation. Further, the text feature representation and the image feature representation are integrated to obtain the global condition feature representation.

The text encoder is implemented by using a pre-trained language model, for example, a bidirectional encoding representation from transformers (BERT), an XLNet (which is an autoregressive model that implements bidirectional context information through a permutation language model), a generative pre-training (GPT) model, or a CLIP (which is an encoding model that can implement multimodal encoding). A semantic embedding, that is, a text feature representation, of a text condition is actually obtained through the text encoder.

The image encoder is a vision transformer (VIT), a CLIP, or the like. A semantic embedding, that is, an image feature representation, of a style image can be actually obtained through the image encoder.

Integrating the text feature representation and the image feature representation refers to concatenating the text feature representation and the image feature representation on a channel dimension. The integrating is represented by using "$^{©}$" in FIG. 4.

The temporal-spatial condition encoder is configured to encode the local condition to obtain a local condition feature representation. Because the local condition includes at least one of a spatial condition and a temporal condition, and because the temporal condition is a sequence-type condition, the local condition includes abundant and complex temporal-spatial relationships, which makes it challenging to controllably guide a video. In view of this, in the embodiments of the present disclosure, temporal-spatial condition encoders are respectively arranged for local conditions. In a feasible implementation, local conditions and temporal-spatial condition encoders are in a one-to-one correspondence.

Each local conditions is respectively encoded by using a temporal-spatial condition encoder, to obtain a feature tensor corresponding to each local condition, and then, fusion processing is performed on the feature tensor corresponding to each local condition to obtain the local condition feature representation.

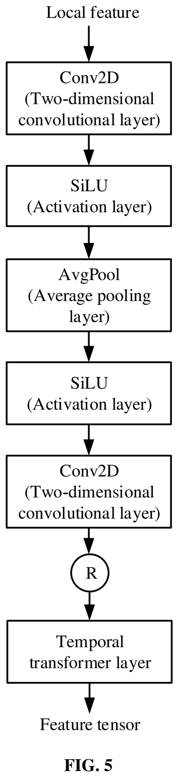

A structure of the temporal-spatial condition encoder is shown in FIG. 5. The temporal-spatial condition encoder first performs spatial feature encoding on a local condition, to obtain a spatial feature representation of the local condition. As shown in FIG. 5, the temporal-spatial condition encoder includes two two-dimensional convolutional (Conv2D) layers, two activation layers (for example, a SiLU activation function is used), and an average pooling layer.

In response to the local condition inputted into the temporal-spatial condition encoder being a sequence, temporal self-attention processing is performed on the spatial feature representation of the local condition (that is, in terms of the temporal dimension), to obtain a feature tensor corresponding to each local condition. This part is executed by a temporal transformer shown in FIG. 5.

In response to the local condition inputted into the temporal-spatial condition encoder being not the sequence, for example, the local condition is a single image or a single semantic sketch, the spatial feature representation of the local condition is first copied in a temporal dimension to generate a spatial feature representation in the temporal dimension. This part is performed by "$^{®}$" in FIG. 5, so that the spatial feature representation is aligned with a spatial feature representation corresponding to a sequence-type local condition in the temporal dimension. Then, temporal self-attention processing is performed through the temporal transformer on the spatial feature representation in the temporal dimension, to obtain the feature tensor corresponding to each local condition.

In one of the feasible implementations, when feature tensors corresponding to local conditions are fused, the feature tensors are added element by element.

It can be seen that the temporal-spatial condition encoder actually first extracts local spatial information, and then performs temporal dimension modeling, to promote explicit embedding in the temporal dimension. In addition, a unified interface is provided for different local conditions, to enhance inter-frame consistency. For a non-temporal dimension-type spatial condition such as a single image or a single semantic sketch, the spatial condition is copied in the temporal dimension to ensure consistency with the temporal condition, thereby implementing fusion of local conditions. Such encoding and fusion processing enables a subsequently generated video to be more controllable in terms of temporal and spatial perception. Particularly, a motion vector sequence is introduced to the temporal condition, so that inter-frame dynamics can be captured, thereby directly controlling internal motion in a video.

An operation of step 206, that is, "integrating the noise sequence with the local condition feature representation, to obtain the noise latent vector sequence; and denoising the noise latent vector sequence by using the diffusion model, to obtain the denoised latent vector sequence", is described below in detail with reference to some embodiments.

In some embodiments of the present disclosure, a noise sequence $\varepsilon$ can be randomly generated. The randomly generated noise sequence conforms to a normal distribution, that is, is Gaussian noise, and a length of the noise sequence is consistent with a length of a video to be generated, where both are T1. After the temporal-spatial condition encoder encodes and integrates the local condition, a local condition feature representation and $\varepsilon$ have the same spatial shape. Then, the noise sequence and the local condition feature representation are integrated. For example, the noise sequence and the local condition feature representation are concatenated along a channel dimension, to obtain a noise latent vector sequence $z_t$. The noise latent vector sequence is determined as a control signal for video generation.

Due to more stable training and generation flexibility, the diffusion model has been the diffusion model has been widely used in the field of image generation, but has not been well used in the field of video generation. To effectively process video data, a latent diffusion model (IDM) is introduced in some embodiments of the present disclosure to maintain local fidelity. That is, an initial video is projected to a latent representation, and then the latent representation is mapped back to a pixel space by using a decoder to obtain a final video.

The initial video is a noise sequence, and the final video is a generated video. In addition to the IDM, a diffusion model of another type may also be used.

Processing of the diffusion model is understood as predicting normally distributed noise, and performing denoising at each time step, to restore real video content. This process simulates a reverse process of a Markov chain with a length. T is a total time step of the diffusion model. A longer T indicates a better denoising effect, but has larger impact on calculation performance. Therefore, a balance needs to be made between the two. T is an empirical value or an experimental value, for example, is 1000.

The diffusion model may predict, at each time step, noise at a current time step by using a noise latent vector sequence obtained at a previous time step (a noise latent vector sequence input by using the diffusion model at a first time step), and denoise the noise latent vector sequence by using the predicted noise, to obtain a noise latent vector sequence at the current time step.

Further, when an input condition includes a global condition, the diffusion model performs cross-attention processing on the noise latent vector sequence by using a global condition feature representation to predict noise, and performs denoising processing by using the predicted noise.

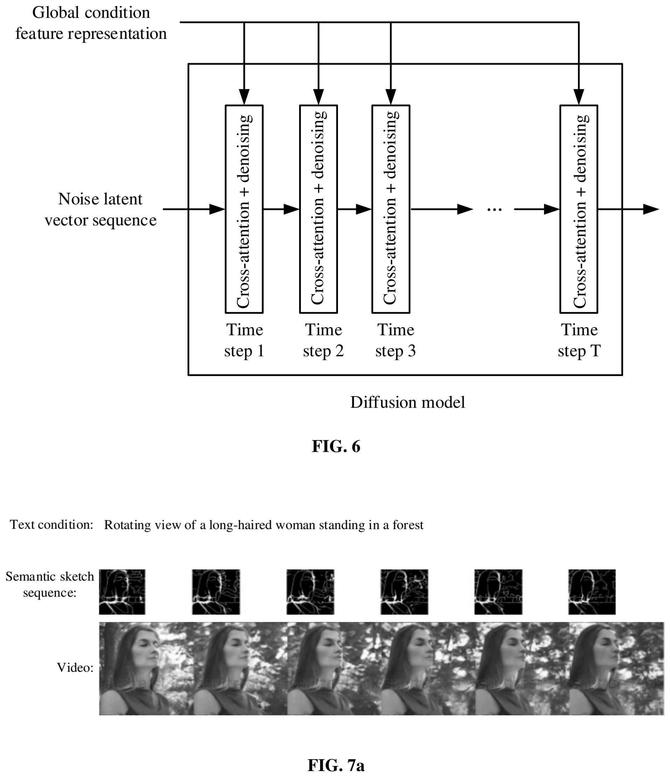

Specifically, as shown in FIG. 6, the diffusion model performs cross-attention processing on a noise latent vector sequence by using a global condition feature representation at a first time step to predict noise at a current time step, and denoises the noise latent vector sequence by using the predicted noise, to obtain a noise latent vector sequence at the current time step.

The diffusion model may perform, at another time step by using the global condition feature representation, cross-attention processing on the noise latent vector sequence obtained at a previous first time step to predict the noise at a current time step, and denoise, by using the predicted noise, the noise latent vector sequence obtained at the previous time step, to obtain the noise latent vector sequence at the current time step.

A three-dimensional UNet is determined as a backbone network of the diffusion model. A UNet network is an encoder-decoder network into which skip connection is introduced, is named because it has a structure similar to the letter U, and can combine a deep high-level feature with a shallow low-level feature. Since the UNet network is a known network, details are not described herein.

The foregoing process is considered as applying a denoising function $\varepsilon_\theta(\cdot,\cdot,t)$ to a noise latent vector sequence $z_t$ and a condition (for example, including a global condition and a local condition) c, where $t \in \{1,...,T\}$. During denoising, a cross-attention mechanism is used for injecting a global condition, so that the global condition guides video generation in terms of overall semantics.

Finally, the expansion module inputs a denoised latent vector sequence obtained at a last step into the decoder in step 208, and the decoder performs decoding processing on the denoised latent vector sequence to generate a video. As for the decoder, a decoder of an existing video generation model can be used, and details are not described herein.

In the foregoing manner provided in some embodiments of the present disclosure, various conditions can be flexibly combined to generate videos that are more diverse. Controllability of the present disclosure in video generation is described herein by using a few examples.

Example 1: a text condition in the global condition and a temporal condition in the local condition are combined.

As shown in FIG. 7a, a user inputs a text condition "Rotating view of a long-haired woman standing in a forest" and a semantic sketch sequence. In this example, a length of the sequence is 6 frames. A finally generated video is shown in FIG. 7a. Frames of images in the video are shown in FIG. 7a.

Example 2: a spatial condition and a temporal condition in the local condition are combined.

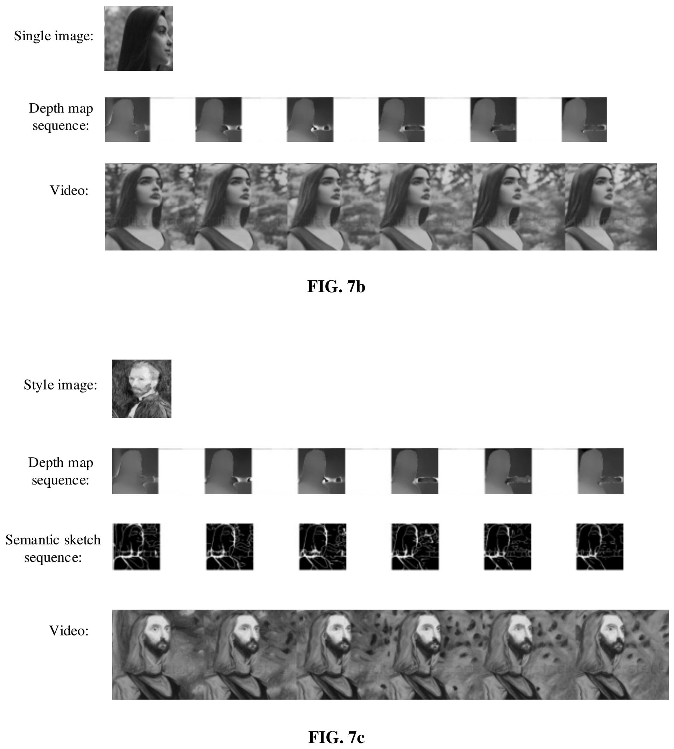

The user inputs a single image and a depth map sequence, and a finally generated video is shown in FIG. 7b.

Example 3: a style condition in the global condition, a depth map sequence and a semantic sketch sequence in the local condition are combined.

A user inputs a style image, a depth map sequence, and a semantic sketch sequence, and a finally generated video is shown in FIG. 7c.

Example 4: a text condition and a style condition in the global condition, and a semantic sketch and a motion vector sequence in the local condition are combined.

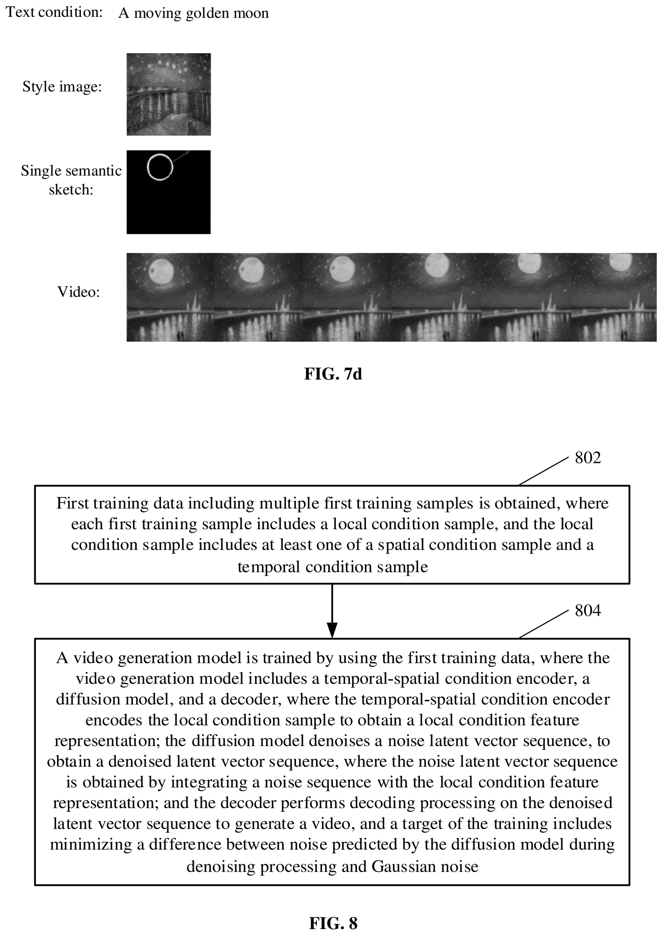

A user inputs a text condition "A moving golden moon", a style image, and a semantic sketch, and the user may hand-draw a moving direction of the moon on the semantic sketch. A video generation apparatus on a server side can automatically generate a motion vector sequence according to the moving direction of the moon hand-drawn by the user on the semantic sketch, to generate the video in the manner provided by some embodiments of the present disclosure. As shown in FIG. 7d, the moon in the generated video moves along the moving direction hand-drawn by the user.

The foregoing process of training the video generation model is described below in detail with reference to some embodiments. FIG. 8 is a flowchart of a method for training the video generation model according to some embodiments of the present disclosure. A process of the method is performed by the model training apparatus in the system architecture shown in FIG. 1. As shown in FIG. 8, the method may include the following steps.

In step 802, first training data including multiple first training samples is obtained, where each first training sample includes a local condition sample, and the local condition sample includes at least one of a spatial condition sample and a temporal condition sample.

Further, the first training data samples further include a global condition sample, where the global condition sample includes at least one of a text condition sample, a style condition sample, and a color condition sample.

In one of the feasible implementations, a video sample is first obtained, and a description text of the video sample is obtained as the text condition sample. A style image of the video sample is obtained as the style condition sample, and a color histogram of the video sample is obtained as the color condition sample. For example, the description text of the video sample is obtained by using an existing video description text generation model, or the description text of the video sample is obtained from a web page from which the video sample originates, or the description text of the video sample is manually added, and so on. For example, a first frame of an image of the video sample is used as the style image. In another example, a color histogram corresponding to the first frame of the image of the video sample is used as the color condition sample.

Then, at least one of a single image and a single semantic sketch is extracted from the video sample as a spatial condition sample. For example, the first frame of the image of the video sample is used as the foregoing single image. In another example, edge extraction is performed on the first frame of the image in the video sample, and the single semantic sketch is formed by using edge information extracted from the image. Alternatively, the single semantic sketch is generated for the first frame of the image in the video sample by using a hand-drawn sketch generation tool.

Then, at least one of a motion vector sequence, a depth map sequence, a mask map sequence, a semantic sketch sequence, and a grayscale map sequence is extracted from the video sample as the temporal condition sample. For example, motion vectors between adjacent frames are extracted from the video sample to form the motion vector sequence. Depth maps of frames of images are extracted from the video sample to form the depth map sequence. Mask processing is performed on frames in the video sample, to obtain the mask map sequence. Semantic sketches are generated for frames of images in the video sample, to obtain the semantic sketch sequence. Grayscale maps are generated for frames of images in the video sample, to obtain the grayscale map sequence.

In addition to the foregoing manner, other manners may also be used for obtaining the foregoing condition sample, which are not listed one by one herein.

It should be noted that limitations, such as "first" and "second", involved in some embodiments of the present disclosure do not have limitations in terms of size, order, quantity, and the like, and are used for distinguishing in terms of names. For example, "a first training sample" and "a second training sample" are used for distinguishing two types of training samples in terms of names.

In step 804, a video generation model is trained by using the first training data, where the video generation model includes a temporal-spatial condition encoder, a diffusion model, and a decoder, where the temporal-spatial condition encoder encodes the local condition sample to obtain a local condition feature representation; the diffusion model denoises a noise latent vector sequence, to obtain a denoised latent vector sequence, where the noise latent vector sequence is obtained by integrating a noise sequence with the local condition feature representation; and the decoder performs decoding processing on the denoised latent vector sequence to generate a video, and a target of the training includes minimizing a difference between noise predicted by the diffusion model during denoising processing and Gaussian noise.

Further, the video generation model may further include a global encoder. The global encoder encodes the global condition sample to obtain a global condition feature representation. Correspondingly, the diffusion model performs cross-attention processing on the noise latent vector sequence by using a global condition feature representation to predict noise, and performs denoising processing by using the predicted noise.

In one of the feasible implementations, when the global condition sample includes a text condition sample, the global encoder performs text encoding on the text condition sample by using a text encoder to obtain a text feature representation, and the text feature representation is determined as the global condition feature representation.

In another feasible implementation, when the global condition further includes at least one of a style condition sample and a color condition sample in addition to a text condition sample, the global encoder performs text encoding on the text condition sample by using a text encoder to obtain a text feature representation, and performs image encoding on at least one of the style condition sample and the color condition sample by using an image encoder to obtain an image feature representation. Further, the text feature representation and the image feature representation are integrated to obtain a global condition feature representation.

In one of the feasible implementations, local condition samples are encoded by using temporal-spatial condition encoders, to obtain a feature tensor corresponding to each local condition sample, where the temporal-spatial condition encoders are in a one-to-one correspondence with the local conditions. Then, the feature tensor corresponding to each local condition sample are fused, to obtain the local condition feature representation.

Spatial feature encoding is first performed on the local condition sample by using the temporal-spatial condition encoder, to obtain the spatial feature representation of the local condition sample. In response to the local condition sample being a sequence, temporal self-attention processing is performed on the spatial feature representation of the local condition sample, to obtain a feature tensor corresponding to the local condition sample. In response to the local condition sample being not a sequence, the spatial feature representation of the local condition sample in a temporal dimension is copied, to generate a spatial feature representation in the temporal dimension, and temporal self-attention processing is performed on the spatial feature representation in the temporal dimension, to obtain the feature tensor corresponding to the local condition sample.

In one of the feasible implementations, the diffusion model performs cross-attention processing on a noise latent vector sequence by using a global condition feature representation at a first time step to predict noise at a current time step, and denoises the noise latent vector sequence by using the predicted noise, to obtain a noise latent vector sequence at the current time step.

The diffusion model may perform, at another time step by using the global condition feature representation, cross-attention processing on the noise latent vector sequence obtained at a previous first time step to predict the noise at the current time step, and denoise, by using the predicted noise, the noise latent vector sequence obtained at the previous time step, to obtain the noise latent vector sequence at the current time step.

For a specific structure and detailed descriptions of the video generation model, reference is made to related records about FIG. 4, FIG. 5, and FIG. 6 in the foregoing method embodiments, and details are not described herein again.

In some embodiments of the present disclosure, a loss function is constructed according to the foregoing target of the training. A value of the loss function is utilized in each iteration of training the video generation model to update parameters of the model in a manner, such as gradient descent, until a preset training end condition is satisfied. The training end condition may include, for example, that the value of the loss function is less than or equal to a preset loss function threshold, or that a quantity of iterations reaches a preset quantity threshold.

In one of the feasible implementations, the constructed loss function $L_{VLDM}$ is shown as the following formula:

$$L_{VLDM} = E_{\varepsilon \in N(0,1),c,t}[\|\varepsilon - \varepsilon_\theta(z_t,c,t)\|_2^2] \qquad (1)$$

where $\varepsilon$ represents Gaussian noise, that is, random noise satisfying a normal distribution. $\varepsilon_\theta(z_t,c,t)$ refers to noise obtained by predicting a noise latent vector sequence $z_t$ and a condition c (including the global condition and the local condition involved in the foregoing embodiment) at a time step t. A time step is randomly selected in each

iteration. $\left\|\ \right\|_2^2$ represents calculation of a 2-norm square. $E$ is processing of taking an expectation, and $E_{\varepsilon \in N(0,1),c,t}[]$ refers to taking an expectation of content in [] under a constraint of $\varepsilon \in N(0,1),c,t$. $N(0,1)$ is a normal distribution.

In addition, in addition to the loss function shown in the foregoing formula (1), other loss functions used within the spirit and principle also fall within the protection scope of the present disclosure. For example, the loss function is obtained by selecting, in each iteration, differences between noise predicted at multiple time steps and the Gaussian noise.

In one of the feasible implementations, in a process of training the video generation model, the global encoder and the decoder may use pre-trained parameters, and update, in each iteration of the training, parameters of the temporal-spatial condition encoder and the diffusion model by using a loss function corresponding to the target of the training.

The global encoder is pre-trained by using other tasks such as an image generation task and a text classification task. The decoder may also be pre-trained by using other tasks such as the image generation task and an image classification task. These are existing training tasks and are not described in detail herein.

Before the video generation model is trained, initialization is performed by using parameters of the diffusion model in the image generation model. This manner reduces training difficulty to some extent and accelerates training. However, there is still difficulty in learning and processing a temporal dimension feature and multi-condition video generation. In view of this, the present disclosure provides a more preferable implementation, that is, a two-stage training policy is used. Before the video generation model is trained by using the first training data, the diffusion model is first pre-trained. The pre-training is utilizing a process of generating the video based on the text condition to enable the diffusion model to learn, and then, further training the video generation model based on parameters of the pre-trained diffusion model by utilizing the first training data (that is, including multiple conditions such as the global condition and the local condition).

A process of pre-training the diffusion model may include the following steps.

Second training data including multiple second training samples is obtained, where the second training samples include a description text extracted from a video sample and determined as a text sample. The description text of the video sample is obtained by using an existing video description text generation model, or the description text of the video sample is obtained from a web page from which the video sample originates, or the description text of the video sample is manually added, and so on.

Then, the text sample is encoded by using the global encoder, to obtain the text feature representation.

Then, the obtained text feature representation and the noise sequence are inputted into the diffusion model to train the diffusion model, where the diffusion model denoises the noise sequence by using the text feature representation. A target of the training includes minimizing a difference between noise predicted by the diffusion model at each time step during denoising processing and Gaussian noise. A loss function used in the pre-training is the same as that used in the foregoing formula (1), but includes a different condition $c$. The condition c involved in the pre-training process includes the text condition.

That is, when the input condition includes the text condition, the diffusion model is trained by using a process of generating the video. Then, the parameters of the diffusion model obtained through training is used as initialization parameters used by the diffusion model when the video generation model is trained in step 804.

Embodiments of the present disclosure are described above. Other embodiments fall within the scope of the appended claims. In some cases, the actions or steps recited in the claims are performed in a different order than in the embodiments and the desired result may still be achieved. In addition, the processes depicted in the accompanying drawings do not necessarily require the particular order shown or sequential order to achieve the desired results. In some implementations, multitasking and parallel processing may also be feasible or beneficial.

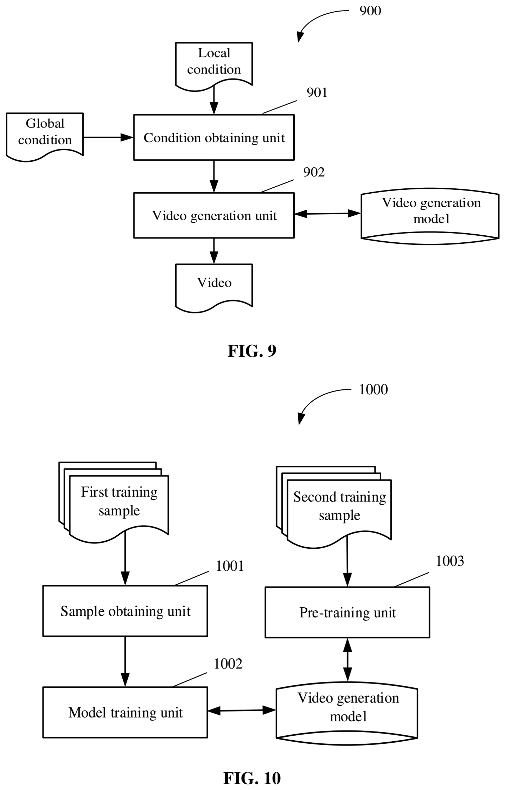

According to some embodiments of another aspect, a video generation apparatus is provided. FIG. 9 is a schematic block diagram of a video generation apparatus according to some embodiments. The video generation apparatus corresponds to the model training apparatus in the system shown in FIG. 1. As shown in FIG. 9, the video generation apparatus 900 includes a condition obtaining unit 901 and a video generation unit 902. Main functions of the component units are as follows.

The condition obtaining unit 901 is configured to obtain a local condition, where the local condition includes at least one of a spatial condition and a temporal condition.

The video generation unit 902 is configured to encode the local condition to obtain a local condition feature representation; integrate a noise sequence with the local condition feature representation, to obtain a noise latent vector sequence; denoise the noise latent vector sequence by using a diffusion model, to obtain a denoised latent vector sequence; and perform decoding processing on the denoised latent vector sequence to generate a video.

Further, the condition obtaining unit 901 is further configured to obtain a global condition, where the global condition includes at least one of a text condition, a style condition, and a color condition.

Correspondingly, the video generation unit 902 is further configured to encode the global condition to obtain a global condition feature representation. The diffusion model may perform cross-attention processing on the noise latent vector sequence by using the global condition feature representation to predict noise, and perform denoising processing by using the predicted noise.

The spatial condition may include at least one of a single image and a single semantic sketch. The temporal condition includes at least one of a motion vector sequence, a depth map sequence, a mask map sequence, a semantic sketch sequence, and a grayscale map sequence.

The video generation unit 902 is implemented by using the video generation model shown in FIG. 3. The global encoder is configured to encode the global condition to obtain the global condition feature representation. The temporal-spatial condition encoder is configured to encode the local condition to obtain the local condition feature representation. The noise latent vector sequence is denoised by using the diffusion model, to obtain the denoised latent vector sequence. The decoder performs decoding processing on the denoised latent vector sequence to generate the video.

In one of the feasible implementations, the global encoder in the video generation model performs text encoding on the text condition, to obtain a text feature representation, and performs image encoding on at least one of the style condition and the color condition, to obtain an image feature representation. The text feature representation and the image feature representation are integrated to obtain a global condition feature representation.

In one of the feasible implementations, each local condition is encoded by a respective temporal-spatial condition encoder, to obtain a feature tensor corresponding to each local condition respectively, where each temporal-spatial condition encoder corresponds to one local condition. Fusion processing is performed on the feature tensor corresponding to each local condition, to obtain the local condition feature representation.

Specifically, the temporal-spatial condition encoder performs spatial feature encoding on the local condition by using the temporal-spatial condition encoder, to obtain a spatial feature representation of the local condition. In response to the local condition being a sequence, temporal self-attention processing is performed on the spatial feature representation of the local condition, to obtain a feature tensor corresponding to the local condition. In response to the local condition being not a sequence, the spatial feature representation of the local condition in a temporal dimension is copied, to generate a spatial feature representation in the temporal dimension, and temporal self-attention processing is performed on the spatial feature representation in the temporal dimension, to obtain a feature tensor corresponding to the local condition.

According to some embodiments of another aspect, an apparatus for training a video generation model is provided. FIG. 10 is a schematic block diagram of an apparatus for training a video generation model according to some embodiments. As shown in FIG. 10, the apparatus 1000 includes a sample obtaining unit 1001 and a model training unit 1002, and further includes a pre-training unit 1003. Main functions of the component units are as follows.

The sample obtaining unit 1001 is configured to obtain first training data including multiple first training samples, where each first training sample includes a local condition sample, and the local condition sample includes at least one of a spatial condition sample and a temporal condition sample.

The model training unit 1002 is configured to train a video generation model by using the first training data, where the video generation model includes a temporal-spatial condition encoder, a diffusion model, and a decoder, where the temporal-spatial condition encoder encodes the local condition sample to obtain a local condition feature representation; the diffusion model denoises a noise latent vector sequence, to obtain a denoised latent vector sequence, where the noise latent vector sequence is obtained by integrating a noise sequence with the local condition feature representation; and the decoder performs decoding processing on the denoised latent vector sequence to generate a video; and a target of the training includes minimizing a difference between noise predicted by the diffusion model during denoising processing and Gaussian noise.

Further, each first training sample further includes a global condition sample, where the global condition sample includes at least one of a text condition sample, a style condition sample, and a color condition sample.

The video generation model further includes a global encoder, where the global encoder encodes the global condition sample to obtain a global condition feature representation. Correspondingly, the diffusion model performs cross-attention processing on the noise latent vector sequence by using a global condition feature representation to predict noise, and performs denoising processing by using the predicted noise.

In one of the feasible implementations, the global encoder and the decoder may use pre-trained parameters, and update, in each iteration of the training, parameters of the temporal-spatial condition encoder and the diffusion model by using a loss function corresponding to the target of the training.

In one of the feasible implementations, the sample obtaining unit 1001 obtains a video sample; obtains at least one of a description text, a style image, and a color histogram of the video sample, set the description text as the text condition sample, set the style image as the style condition sample, and set the color histogram as the color condition sample; extract at least one of a single image and a single semantic sketch as the spatial condition sample; and extract at least one of a motion vector sequence, a depth map sequence, a mask map sequence, a semantic sketch sequence, and a grayscale map sequence as the temporal condition sample.

In one of the feasible implementations, the pre-training unit 1003 is configured to pre-train the diffusion model in the following manner.

Second training data including multiple second training samples is obtained, where the second training samples include a description text extracted from a video sample and determined as a text sample.

The text sample is encoded by using the global encoder, to obtain the text feature representation.

The text feature representation and a noise sequence are inputted into the diffusion model to train the diffusion model, where the diffusion model denoises the noise sequence by using the text feature representation. A target of the training includes minimizing a difference between noise predicted by the diffusion model at each time step during denoising processing and Gaussian noise.

Correspondingly, the model training unit 1002 further trains the video generation model by using the first training data based on parameters of the diffusion model obtained through pre-training by the pre-training unit 1003.

In one of the feasible implementations, the temporal-spatial condition encoder may encode local condition samples by using temporal-spatial condition encoders, to obtain a feature tensor corresponding to each local condition sample, where each temporal-spatial condition encoder corresponds to one local condition sample. The feature tensor corresponding to each local condition sample are fused, to obtain the local condition feature representation.

In one of the feasible implementations, spatial feature encoding is first performed on a local condition sample by using the temporal-spatial condition encoder, to obtain a spatial feature representation of the local condition sample. In response to the local condition sample being a sequence, temporal self-attention processing is performed on the spatial feature representation of the local condition sample, to obtain a feature tensor corresponding to the local condition sample. In response to the local condition sample being not a sequence, the spatial feature representation of the local condition sample in a temporal dimension is copied, to generate a spatial feature representation in the temporal dimension, and performing temporal self-attention processing on the spatial feature representation in the temporal dimension, to obtain the feature tensor corresponding to the local condition sample.

Embodiments in the present disclosure are all described in a progressive manner, for same or similar parts in embodiments, reference is made to these embodiments, and each embodiment focuses on a difference from other embodiments. Especially, an apparatus embodiment is basically similar to a method embodiment, and therefore is described briefly; for related parts, refer to partial descriptions in the method embodiment. The foregoing described device embodiments are examples. The units described as separate parts may or may not be physically separate, and the parts displayed as units may or may not be physical units, are located in one position, or are distributed on multiple network units. Some or all the modules are selected according to actual needs to achieve the objectives of the solutions of embodiments. A person having ordinary skill in the art may understand and implement embodiments of the present disclosure without creative efforts.

It should be noted that user information (including but not limited to user equipment information, user personal information, and the like) and data (including but not limited to data for analysis, stored data, displayed data, and the like) involved in the present disclosure are all authorized by the user or information and data fully authorized by all parties. The collection, use, and processing of relevant data need to conform to relevant laws, regulations, and standards of relevant countries and regions, and provide corresponding operation portals for the user to choose to authorize or refuse.

In addition, some embodiments of the present disclosure further provides a computer-readable storage medium, storing a computer program, where steps of the method according to any one of the foregoing method embodiments are implemented when the computer program is executed by a processor.

In addition, an electronic device is provided, including:

at least one processor; and

a memory associated with the at least one processor, where the memory is configured to store program instructions, and the program instructions, when being read and executed by the at least one processor, implement the steps of the method according to any one of the foregoing method embodiments.

The present disclosure further provides a computer program product, including a computer program. The computer program, when executed by a processor, implements steps of the method according to any one of the foregoing method embodiments.

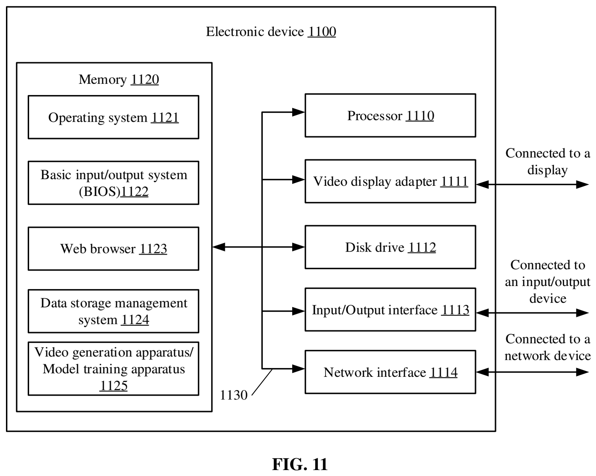

FIG. 11 exemplarily shows an architecture of an electronic device, which may specifically include a processor 1110, a video display adapter 1111, a disk drive 1112, an input/output interface 1113, a network interface 1114, and a memory 1120. The processor 1110, the video display adapter 1111, the disk drive 1112, the input/output interface 1113, the network interface 1114, and the memory 1120 is communicatively connected with each other by a communication bus 1130.

The processor 1110 is implemented in a form of a general-purpose CPU, a microprocessor, an application-specific integrated circuit (ASIC), or at least one integrated circuit, and is configured to execute a related program to implement the technical solutions provided in the present disclosure.

The memory 1120 is implemented in a form of a read-only memory (ROM), a random access memory (RAM), a static storage device, or a dynamic storage device. The memory 1120 may store an operating system 1121 configured to control running of the electronic device 1100, and a basic input/output system (BIOS) 1122 configured to control a low-level operation of the electronic device 1100. In addition, a web browser 1123, a data storage management system 1124, a video generation apparatus or model training apparatus 1125, and the like may further be stored. The video generation apparatus or model training apparatus 1125 is an application program that specifically implements operations in the foregoing steps in the embodiments of the present disclosure. During implementation of the technical solutions provided in the present disclosure by using software or firmware, related program code is stored in the memory 1120 and is invoked and executed by the processor 1110.

The input/output interface 1113 is configured to connect an input/output module to implement information input and output. The input/output module is configured in the device (not shown in the figure) as a component, or is externally connected with the device to provide corresponding functions. The input device may include a keyboard, a mouse, a touch screen, a microphone, various sensors, and the like, and the output device may include a display, a speaker, a vibrator, an indicator light, and the like.

The network interface 1114 is configured to connect a communication module (not shown in the figure), to implement communication interaction between the present device and other devices. The communication module may implement communication in a wired manner (such as USB and a network cable), or may implement communication in a wireless manner (such as a mobile network, Wi-Fi, and Bluetooth).

The bus 1130 includes a channel, for transmitting information between components (such as the processor 1110, the video display adapter 1111, the disk drive 1112, the input/output interface 1113, the network interface 1114, and the memory 1120) of the device.

It should be noted that although the processor 1110, the video display adapter 1111, the disk drive 1112, the input/output interface 1113, the network interface 1114, the memory 1120, the bus 1130, and the like of the foregoing device are shown. In a specific implementation, the device may further include other components necessary for normal operation. In addition, a person having ordinary skill in the art can understand that the foregoing device may include components necessary to implement the solutions of the present disclosure, but does not necessarily include all the components shown in the drawings.

It is learned from description of the foregoing implementation manners that, a person having ordinary skill in the art may clearly understand that the present disclosure is implemented by using software in addition to a necessary universal hardware platform. Based on such an understanding, the technical solutions of the present disclosure essentially or the part contributing to the related art is implemented in a form of a computer program product. The computer program product is stored in a storage medium, such as a ROM/RAM, a hard disk, or an optical disc, and includes several instructions for instructing a computer device (which is a personal computer, a server, a network device, or the like) to perform the methods described in the embodiments or some parts of the embodiments of the present disclosure.

The technical solutions provided in the present disclosure are described in detail above. The principle and implementations of the present disclosure are described herein through specific examples. The description about the embodiments of the present disclosure is provided to help understand the method and core ideas of the present disclosure. Besides, a person having ordinary skill in the art may make alterations to the specific implementation manners and application scope according to the idea of the present disclosure. In conclusion, the content of the present disclosure shall not be understood as a limitation on the present disclosure.

**Industrial applicability**

Embodiments of the present disclosure provide a video generation method, including the following steps. A local condition is obtained, where the local condition includes at least one of a spatial condition and a temporal condition; the local condition is encoded to obtain a local condition feature representation; a noise sequence is integrated with the local condition feature representation, to obtain a noise latent vector sequence; the noise latent vector sequence is denoised by using a diffusion model, to obtain a denoised latent vector sequence; and decoding processing is performed on the denoised latent vector sequence to generate a video. In the present disclosure, at least one of the spatial condition and the temporal condition is integrated as the local condition. The local condition feature representation is used for integration with a noise sequence, to obtain the noise latent vector sequence, and the noise latent vector sequence is denoised, to obtain the denoised latent vector sequence, and further, decoding is performed, to obtain the video. In this manner, video generation is no longer limited to the text condition, and instead, at least one of the spatial condition and the temporal condition is introduced to guide video generation, to generate videos more flexibly and diversely, thereby improving quality of the videos.

**Claims**

1. A video generation method, comprising:

obtaining a local condition, wherein the local condition comprises at least one of a spatial condition and a temporal condition;

encoding the local condition to obtain a local condition feature representation;

integrating a noise sequence with the local condition feature representation, to obtain a noise latent vector sequence;

denoising the noise latent vector sequence by using a diffusion model, to obtain a denoised latent vector sequence; and

performing decoding processing on the denoised latent vector sequence to generate a video.

2. The video generation method according to claim 1, further comprising:

obtaining a global condition, wherein the global condition comprises at least one of a text condition, a style condition, and a color condition;

encoding the global condition to obtain a global condition feature representation; and

denoising the noise latent vector sequence by using the diffusion model comprises: the diffusion model performing cross-attention processing on the noise latent vector sequence by using the global condition feature representation to predict noise, and performing denoising processing by using the predicted noise.

3. The video generation method according to claim 1, wherein the spatial condition comprises at least one of a single image and a single semantic sketch; and the temporal condition comprises at least one of a motion vector sequence, a depth map sequence, a mask map sequence, a semantic sketch sequence, and a grayscale map sequence.

4. The video generation method according to claim 2, wherein encoding the global condition to obtain the global condition feature representation comprises:

performing text encoding on the text condition to obtain a text feature representation;

performing image encoding on at least one of the style condition and the color condition to obtain an image feature representation; and

integrating the text feature representation with the image feature representation to obtain the global condition feature representation.

5. The video generation method according to any one of claims 1 to 4, wherein encoding the local condition to obtain the local condition feature representation comprises:

encoding, by using a respective temporal-spatial condition encoder, each local condition to obtain a feature tensor corresponding to each local condition respectively, wherein each temporal-spatial condition encoder corresponds to one local condition; and

performing fusion processing on the feature tensor corresponding to each local condition to obtain the local condition feature representation.

6. The video generation method according to claim 5, wherein encoding, by using the temporal-spatial condition encoder, each local condition respectively comprises:

performing spatial feature encoding on the local condition by using the temporal-spatial condition encoder, to obtain a spatial feature representation of the local condition; and

in response to the local condition being a sequence, performing temporal self-attention processing on the spatial feature representation of the local condition, to obtain a feature tensor corresponding to the local condition; in response to the local condition not being the sequence, copying the spatial feature representation of the local condition in a temporal dimension, to generate a spatial feature representation in the temporal dimension, and performing temporal self-attention processing on the spatial feature representation in the temporal dimension, to obtain a feature tensor corresponding to the local condition.

7. A method for training a video generation model, comprising:

obtaining first training data comprising a plurality of first training samples, wherein each first training sample comprises a local condition sample, and the local condition sample comprises at least one of a spatial condition sample and a temporal condition sample;

training a video generation model by using the first training data, wherein the video generation model comprises a temporal-spatial condition encoder, a diffusion model, and a decoder, the temporal-spatial condition encoder encodes the local condition sample to obtain a local condition feature representation; the diffusion model denoises a noise latent vector sequence, to obtain a denoised latent vector sequence, the noise latent vector sequence is obtained by integrating a noise sequence with the local condition feature representation; and the decoder performs decoding processing on the denoised latent vector sequence to generate a video; and

a target of the training comprises minimizing a difference between noise predicted by the diffusion model during denoising processing and Gaussian noise.

8. The method according to claim 7, wherein each first training sample further comprises a global condition sample, wherein the global condition sample comprises at least one of a text condition sample, a style condition sample, and a color condition sample;

the video generation model further comprises a global encoder, wherein the global encoder encodes the global condition sample to obtain a global condition feature representation; and
the diffusion model denoising the noise latent vector sequence comprises: the diffusion model performing cross-attention processing on the noise latent vector sequence by using the global condition feature representation to predict noise, and performing denoising processing by using the predicted noise.

9. The method according to claim 8, wherein the global encoder and the decoder use pre-trained parameters, and update, in each iteration of the training, parameters of the temporal-spatial condition encoder and the diffusion model by using a loss function corresponding to the target of the training.

10. The method according to claim 8, wherein obtaining the first training data comprising the plurality of first training samples comprises:

obtaining a video sample;
obtaining at least one of a description text, a style image, and a color histogram of the video sample, setting the description text as the text condition sample, setting the style image as the style condition sample, and setting the color histogram as the color condition sample respectively;
extracting at least one of a single image and a single semantic sketch as the spatial condition sample; and
extracting at least one of a motion vector sequence, a depth map sequence, a mask map sequence, a semantic sketch sequence, and a grayscale map sequence as the temporal condition sample.

11. The method according to any one of claims 7 to 10, wherein before training the video generation model by using the first training data, the video generation method further comprises: pre-training the diffusion model; and after obtaining parameters of the diffusion model through pre-training, training the video generation model by using the first training data;
wherein pre-training the diffusion model comprises:

obtaining second training data comprising a plurality of second training samples, wherein the second training samples comprise a description text extracted from a video sample and determined as a text sample;
encoding the text sample by using the global encoder, to obtain a text feature representation; and
inputting the text feature representation and a noise sequence into the diffusion model to train the diffusion model, wherein the diffusion model denoises the noise sequence by using the text feature representation, and a target of the training comprises minimizing a difference between noise predicted by the diffusion model at each time step during denoising processing and Gaussian noise.

12. The method according to any one of claims 7 to 10, wherein encoding the local condition sample using the temporal-spatial condition encoder to obtain the local condition feature representation comprises:

respectively encoding local condition samples by using temporal-spatial condition encoders, to obtain a feature tensor corresponding to each local condition sample, wherein each temporal-spatial condition encoder corresponds to one local condition sample; and
fusing the feature tensor corresponding to each local condition sample, to obtain the local condition feature representation.

13. The method according to claim 12, wherein respectively encoding the local condition samples by using temporal-spatial condition encoders comprises:

performing spatial feature encoding on a local condition sample by using the temporal-spatial condition encoder, to obtain a spatial feature representation of the local condition sample; and
in response to the local condition sample being a sequence, performing temporal self-attention processing on the spatial feature representation of the local condition sample, to obtain a feature tensor corresponding to the local condition sample; in response to the local condition sample not being a sequence, copying the spatial feature representation of the local condition sample in a temporal dimension, to generate a spatial feature representation in the temporal dimension, and performing temporal self-attention processing on the spatial feature representation in the temporal dimension, to obtain the feature tensor corresponding to the local condition sample.

14. A video generation method, applied to a cloud server, the video generation method comprising:

obtaining a local condition from a user terminal, wherein the local condition comprises at least one of a spatial condition and a temporal condition;

encoding the local condition to obtain a local condition feature representation;

integrating a noise sequence with the local condition feature representation, to obtain a noise latent vector sequence;

denoising the noise latent vector sequence by using a diffusion model, to obtain a denoised latent vector sequence;

performing decoding processing on the denoised latent vector sequence to generate a video; and

sending the video to the user terminal for display.

15. A video generation apparatus, comprising:

a condition obtaining unit, configured to obtain a local condition, wherein the local condition comprises at least one of a spatial condition and a temporal condition; and

a video generation unit, configured to encode the local condition to obtain a local condition feature representation; integrate a noise sequence with the local condition feature representation, to obtain a noise latent vector sequence; denoise the noise latent vector sequence by using a diffusion model, to obtain a denoised latent vector sequence; and perform decoding processing on the denoised latent vector sequence to generate a video.

16. An apparatus for training a video generation model, comprising:

a sample obtaining unit, configured to obtain first training data comprising a plurality of first training samples, wherein each first training sample comprises a local condition sample, and the local condition sample comprises at least one of a spatial condition sample and a temporal condition sample;

a model training unit, configured to train a video generation model by using the first training data, wherein the video generation model comprises a temporal-spatial condition encoder, a diffusion model, and a decoder, the temporal-spatial condition encoder encodes the local condition sample to obtain a local condition feature representation; the diffusion model denoises a noise latent vector sequence, to obtain a denoised latent vector sequence, the noise latent vector sequence is obtained by integrating a noise sequence with the local condition feature representation; and the decoder performs decoding processing on the denoised latent vector sequence to generate a video; and

a target of the training comprises minimizing a difference between noise predicted by the diffusion model during denoising processing and Gaussian noise.

17. A computer-readable storage medium, storing a computer program, wherein when the computer program is executed by a processor, steps of the method as claimed in any one of claims 1 to 14 are implemented.

18. An electronic device, comprising:

at least one processor; and

a memory associated with the at least one processor, wherein the memory is configured to store program instructions, and the program instructions, when being read and executed by the at least one processor, implement the steps of the method as claimed in any one of claims 1 to 14.

Offline | Online

Training data

Global condition

Local condition

Model training apparatus

Video generation apparatus

Video

Video generation model

Server side

Network

User terminal

**FIG. 1**

202

A local condition is obtained, where the local condition includes at least one of a spatial condition and a temporal condition

204

The local condition is encoded to obtain a local condition feature representation

206

A noise sequence is integrated with the local condition feature representation, to obtain a noise latent vector sequence; and the noise latent vector sequence is denoised by using a diffusion model, to obtain a denoised latent vector sequence

208

Decoding processing is performed on the denoised latent vector sequence to generate a video

**FIG. 2**

FIG. 3

**FIG. 4**

Local feature

↓

Conv2D
(Two-dimensional
convolutional layer)

↓

SiLU
(Activation layer)

↓

AvgPool
(Average pooling
layer)

↓

SiLU
(Activation layer)

↓

Conv2D
(Two-dimensional
convolutional layer)

↓

( R )

↓

Temporal
transformer layer

↓

Feature tensor

**FIG. 5**

Global condition
feature representation

Noise latent
vector sequence

Cross-attention + denoising

Cross-attention + denoising

Cross-attention + denoising

...

Cross-attention + denoising

Time
step 1

Time
step 2

Time
step 3

Time
step T

Diffusion model

**FIG. 6**

Text condition: Rotating view of a long-haired woman standing in a forest

Semantic sketch
sequence:

Video:

**FIG. 7a**

Single image:

Depth map
sequence:

Video:

**FIG. 7b**

Style image:

Depth map
sequence:

Semantic sketch
sequence:

Video:

**FIG. 7c**

Text condition:  A moving golden moon

Style image:

Single semantic
sketch:

Video:

**FIG. 7d**

802

First training data including multiple first training samples is obtained, where each first training sample includes a local condition sample, and the local condition sample includes at least one of a spatial condition sample and a temporal condition sample

804

A video generation model is trained by using the first training data, where the video generation model includes a temporal-spatial condition encoder, a diffusion model, and a decoder, where the temporal-spatial condition encoder encodes the local condition sample to obtain a local condition feature representation; the diffusion model denoises a noise latent vector sequence, to obtain a denoised latent vector sequence, where the noise latent vector sequence is obtained by integrating a noise sequence with the local condition feature representation; and the decoder performs decoding processing on the denoised latent vector sequence to generate a video, and a target of the training includes minimizing a difference between noise predicted by the diffusion model during denoising processing and Gaussian noise

**FIG. 8**

900

Local condition

901

Global condition → Condition obtaining unit

902

Video generation unit ↔ Video generation model

Video

**FIG. 9**

1000

First training sample

Second training sample

1001

Sample obtaining unit

1003

Pre-training unit

1002

Model training unit ↔ Video generation model

**FIG. 10**

Electronic device <u>1100</u>

Memory <u>1120</u>

Operating system <u>1121</u>

Basic input/output system (BIOS)<u>1122</u>

Web browser <u>1123</u>

Data storage management system <u>1124</u>

Video generation apparatus/ Model training apparatus <u>1125</u>

1130

Processor <u>1110</u>

Video display adapter <u>1111</u>

Disk drive <u>1112</u>

Input/Output interface <u>1113</u>

Network interface <u>1114</u>

Connected to a display

Connected to an input/output device

Connected to a network device

**FIG. 11**

# INTERNATIONAL SEARCH REPORT

| International application No. |
|---|
| **PCT/SG2024/050361** |

### A. CLASSIFICATION OF SUBJECT MATTER

***G06N 3/0455 (2023.01)***   *G06N 3/08 (2023.01)*   *G06T 9/00 (2006.01)*

According to International Patent Classification (IPC)

### B. FIELDS SEARCHED

Minimum documentation searched (classification system followed by classification symbols)

G06N, G06T

Documentation searched other than minimum documentation to the extent that such documents are included in the fields searched

Electronic data base consulted during the international search (name of data base and, where practicable, search terms used)

FamPat, IEEE, Google Scholar: Video, 视频, generate, produce, 生成, diffusion, 扩散, model, 模型, noise, 噪声, condition, 条件, latent, 隐, implicit, sequence, 序列, vector, 矢量, variable, 变量, feature, attribute, 特征, 属性, denoise, 去噪, encode, 编码, decode,

### C. DOCUMENTS CONSIDERED TO BE RELEVANT

| Category* | Citation of document, with indication, where appropriate, of the relevant passages | Relevant to claim No. |
|---|---|---|
| X | NI H. et al, Conditional Image-to-Video Generation with Latent Flow Diffusion Models. *Computer Science > Computer Vision and Pattern Recognition, arXiv:2303.13744[cs.CV]*, 24 March 2023, pages 1-15 [searched on 29 August 2024] <DOI:HTTPS://DOI.ORG/10.48550/ARXIV.2303.13744>, figures 2-3, and sections 1-4 | 1-18 |

☒ Further documents are listed in the continuation of Box C.       ☒ See patent family annex.

| | |
|---|---|
| *       Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of the issuance of the international search report |
|---|---|
| 29 August 2024 | 02 September 2024 |

| Name and mailing address of the ISA/SG | Authorized officer |
|---|---|
| **Intellectual Property Office of Singapore** 1 Paya Lebar Link, #11-03 PLQ 1, Paya Lebar Quarter Singapore 408533 E-mail: pct@ipos.gov.sg | Lu Liru (Dr.) IPOS Telephone No. (+65) 6339 8616 |

Form PCT/ISA/210 (second sheet) (July 2022)

## INTERNATIONAL SEARCH REPORT

| | International application No. |
|---|---|
| | **PCT/SG2024/050361** |

**C (Continuation).** DOCUMENTS CONSIDERED TO BE RELEVANT

| Category* | Citation of document, with indication, where appropriate, of the relevant passages | Relevant to claim No. |
|---|---|---|
| X | CN 115965791 A (BEIJING ZITIAO NETWORK TECHNOLOGY CO., LTD.), 14 April 2023, original document, paragraphs [0032]-[0072] | 1, 14-15, 17-18 |
| A | WO 2022/265992 A1 (GOOGLE LLC), 22 December 2022, entire document | - |

Form PCT/ISA/210 (continuation of second sheet (1)) (July 2022)

## INTERNATIONAL SEARCH REPORT
Information on patent family members

International application No.

**PCT/SG2024/050361**

*Note: related known patent family members of the patent documents referred to by this international search report are listed in this annex. This authority only provides information on the related patent family members, and assumes no responsibility for the details of the patents.*

| Patent Documents referred in the Report | Publication Date/Announcement Date (day/month/year) | Patent Family | Publication Date/Announcement Date (day/month/year) |
|---|---|---|---|
| CN 115965791 A | 14/04/2023 | WO 2024/131597 A1 | 27/06/2024 |
| WO 2022/265992 A1 | 22/12/2022 | CN 117296061 A | 26/12/2023 |
| | | EP 4295273 A1 | 27/12/2023 |
| | | US 2023/0267315 A1 | 24/08/2023 |
| | | JP 2024519657 A | 21/05/2024 |

**EP 4 722 982 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310618707